# EUROPÄISCHE PATENTSCHRIFT

(11) **EP 2 513 210 B1**
(45) Veröffentlichungstag und Bekanntmachung des Hinweises auf die Patenterteilung: **27.11.2013**
(21) Anmeldenummer: 11702432.3
(22) Anmeldetag: 28.01.2011
(51) Int. Cl.: B05D 7/02, B05D 3/08, B05D 3/14, C09D 5/00, C08J 7/04, C09D 123/28, C09D 133/00, B32B 5/18, C08J 9/36

(54) **KUNSTSTOFF**
PLASTIC MATERIAL
MATIÈRE PLASTIQUE

(30) Priorität: 05.02.2010 DE 102010007146; 02.07.2010 DE 102010030910
(43) Veröffentlichungstag der Anmeldung: 24.10.2012
(73) Patentinhaber: Mäder Plastilack AG, 96129 Strullendorf (DE)
(72) Erfinder: JUNGBAUER, Norbert, 96114 Röbersdorf (DE); KESTLER, Georg, 96114 Hirschaid (DE); KONRAD, Georg, 96129 Strullendorf (DE); LUDWIG, Andreas, 42781 Haan (DE); LETSCH, Volker, 96163 Gundelsheim (DE)
(74) Vertreter: Ehnis, Tobias
(86) Internationale Anmeldenummer: PCT/EP2011/051249
(87) Internationale Veröffentlichungsnummer: WO 2011/095443

(56) Entgegenhaltungen:
- EP-A1- 1 095 979
- WO-A1-98/05704
- DE-A1- 2 721 532
- DE-C1- 10 001 210
- US-A- 4 129 676

## Beschreibung

Die Erfindung betrifft einen beschichteten Kunststoff aus ei-ner Gruppe umfassend Polyethylen (PE), Polypropylen (PP), Polypropylen/Ethylen-Propylen-Dien-Kautschuk (PP/EPDM) oder Mischungen daraus sowie ein Verfahren zur Beschichtung eines solchen Kunststoffs.

Aus der WO 2004/024839 A1 ist ein Haftzusatz für einen Wasserlack bekannt, der es erlaubt, Kunststoffoberflächen unmittelbar ohne einen Grundierungsschritt zu lackieren. Der Haftzusatz enthält mindestens ein Bindemittel, mindestens ein Pigment, mindestens ein halogeniertes Polyolefin, Wasser, Lösungsmittel und ggf. weitere für wasserlacke übliche Additi-ve.

Aus der DE 39 10 901 A1 ist eine wässrige Beschichtungszusam-mensetzung für Kunststoffformteile, enthaltend Wasser, ein filmbildendes Bindemittelsystem, Pigmente und Hilfsstoffe bekannt, wobei die Beschichtungszusammensetzung eine wässrige, feinteilige Dispersion chlorierter Polyolefine enthält. Weiterhin ist daraus die Verwendung der Beschichtungszusammen-setzung als Haftgrundierung auf Kunststoffformteilen bekannt. Die Beschichtung lässt sich mit üblichen Decklacken lackieren. -

Aus der EP 0 539 710 A1 ist eine lösungsmittelhaltige wässrige Emulsion mit chlorierten Polyolefinen bekannt, die in Haftgrundierungsmitteln zur Beschichtung von Polyolefinsub-straten, insbesondere Polypropylen, eingesetzt werden kann. Aus der WO 02/38689 ist eine Beschichtungszusammensetzung mit einem chlorierten Polyolefin und einem Olefin-basierten Block-Copolymer bekannt. Die Zusammensetzung kann zur Unterstützung der Adhäsion von nachfolgenden Beschichtungen auf Olefinsubstraten eingesetzt werden.

Aus der US 5,397,602 sind modifizierte chlorierte Polyolefine bekannt, die zur Beschichtung eines Kunststoffsubstrats zur Verbesserung der Adhäsion von nachfolgend aufgetragenen Beschichtungen verwendet werden können. Bei dem Kunststoffsubstrat kann es sich um Polyethylen oder Polypropylen handeln.

Bei aus expandiertem Kunststoff bestehenden Substraten, die gemäß dem Stand der Technik mit einer ein halogeniertes Polyolefin enthaltenden Grundierung und anschließend mit einem Lack beschichtet worden sind, hat es sich gezeigt, dass die Beschichtung bei mechanischer Belastung vom Kunststoff abplatzt. Es handelt sich dabei um einen sogenannten Adhäsionsbruch, d. h. die Beschichtung löst sich zwischen dem Kunststoffsubstrat und der ein halogeniertes Polyolefin enthaltenden Grundierung, während die Grundierung mit dem darauf haftenden Lack verbunden bleibt. Besonders leicht platzt die Beschichtung ab, wenn das Substrat vor der mechanischen Belastung Temperaturschwankungen und der Witterung ausgesetzt war.

Aufgabe der vorliegenden Erfindung ist es, einen Kunststoff anzugeben, welcher eine besonders fest anhaftende und beständige Beschichtung aufweist, wobei es sich bei dem Kunststoff um PE, PP, PP/EPDM oder Mischungen daraus handelt. Weiterhin soll ein verfahren zur Beschichtung eines solchen Kunststoffs angegeben werden.

Die Erfindung wird durch die Merkmale der Ansprüche 1 und 7 gelöst. Zweckmäßige Ausgestaltungen der Erfindung ergeben sich aus den Merkmalen der Ansprüche 2 bis 6 und 8 bis 14.

Erfindungsgemäß ist ein Kunststoff aus einer Gruppe umfassend Polyethylen (PE), Polypropylen (PP), Polypropylen/EthylenPropylen-Dien-Kautschuk (PP/EPDM) oder Mischungen daraus vorgesehen, wobei der Kunststoff mit mindestens einer ein halogeniertes Polyolefin enthaltenden Grundierung und die Grundierung mit mindestens einem durch polymerisation unter Beteiligung einer Radikalreaktion gehärteten elastischen Lack beschichtet ist. Bei dem Kunststoff handelt es sich um einen expandierten Kunststoff, bei dem der Lack das Eindringen von Feuchtigkeit unterbindet. Das bedeutet, dass Poren des expandierten Kunststoffs vom Lack überspannt und dadurch verschlossen sind. Feuchtigkeit ist dabei im Sinne von Wasser und nicht im Sinne vereinzelter gasförmiger analytisch nachweisbarer Wassermoleküle zu verstehen.

Bei den bisher bekannten mit einem chlorierten Polyolefin und einem Lack beschichteten expandierten Kunststoffen war der Lack kein elastischer durch Polymerisation unter Beteiligung einer Radikalreaktion gehärteter Lack. Die Erfinder der vorliegenden Erfindung haben erkannt, dass ein solcher Lack sehr gut die Poren des expandierten Kunststoffs überspannen und bei der Beschichtung durch die Radikalreaktion so schnell aushärten kann, dass sich die Lackschicht über den Poren während des Aushärtens durch Fließprozesse nicht wesentlich verdünnt. Aufgrund seiner Elastizität kann der Lack Verformungen dieser Poren und des Kunststoffs nachvollziehen. Dadurch ist die durch die Grundierung vermittelte Haftung des Lacks auf dem Kunststoff sehr gut. Es kommt nicht zu der bereits bei einer kleineren Verformung des expandierten Kunststoffs bisher üblichen Lackablösung. Die Grundierung aus dem halogenierten Polyolefin bildet auf dem expandierten Kunststoff in Verbindung mit dem durch Polymerisation unter Beteiligung einer Radikalreaktion gehärteten elastischen Lack eine sehr gut dauerhaft haftende und gegenüber mechanischer Belastung relativ unempfindliche Beschichtung.

Bei lackierten expandierten Kunststoffen gab es bisher stets das Problem, dass diese sich wegen darin eingeschlossener Luft und eingedrungener Feuchtigkeit in Abhängigkeit der Temperatur stark ausdehnten oder zusammenzogen. Dies hat bisher insbesondere im Fahrzeugbau, wo lackierte Teile Temperaturen von -30°C bis +70°C ausgesetzt sein können, einen Einsatz lackierter expandierter Kunststoffe stark erschwert. Beim erfindungsgemäßen Kunststoff unterbindet der Lack das Eindringen von Feuchtigkeit. Weiterhin ist der Lack so plastisch, dass dieser temperaturbedingte volumenänderungen toleriert, ohne sich dabei vom Kunststoff abzulösen. Dies ermöglicht auch einen Einsatz des Kunststoffs in thermisch stark belasteten Bereichen, beispielsweise als Isolierung von Teilen von Klimaanlage, die z. B. auf Dächern von Kühlfahrzeugen angeordnet sind.

Durch die Kombination des Kunststoffs mit der angegebenen Grundierung und dem angegeben Lack wird eine extrem feste Verbindung zwischen dem Kunststoff und dem Lack bereitgestellt. Dies ist insbesondere bei Kunststoffteilen an Fahrzeugen, wie beispielsweise Stoßfängern oder Schutzleisten, vorteilhaft, weil hier häufig vorkommende kleinere mechanische Belastungen des Lacks nicht sofort zu einer Ablösung des Lacks vom Kunststoff führen. Experimente mit expandiertem Polypropylen (EPP) haben gezeigt, dass die Haftung der Grundierung und des Lacks auf dem expandierten Kunststoff so fest ist, dass bei Ausüben einer zunehmenden Zugkraft am Lack nicht wie bisher der Lack vom EPP gelöst wird, sondern das EPP zerstört wird.

Dem expandierten Kunststoff kann durch die Beschichtung eine hohe Stabilität verliehen werden. Dadurch können leichte Strukturen hergestellt werden, die wegen mangelnder Stabilität bisher nicht aus expandiertem Kunststoff hergestellt werden. Dadurch lässt sich Gewicht einsparen. Eine mögliche Anwendungen ist dabei der Fahrzeugbau, insbesondere im Bereich von Stoßstangen, Knieschützern unter Armaturenbrettern, Sitzbänken usw. Ein derart beschichteter expandierter Kunststoff kann beispielsweise das bisher häufig verwendete Polyurethan ersetzen und ist bei gleicher Stabilität wesentlich leichter. Andere Anwendungen sind Flugzeugtragflächen, insbesondere im Modellbaubereich, aber auch Isolierungen, beispielsweise für Kabelschächte. Für Isolierungen im Bereich von Gebäuden kann der Lack so gewählt werden, dass darauf Tapeten haften.

Ein weiterer großer vorteil besteht darin, dass auch die Grundierung in dem expandierten Kunststoff enthaltene Poren, zumindest wenn sie klein sind, überbrücken und Unebenheiten in dem expandierten Kunststoff ausgleichen kann. Dadurch kann bei guter Haftung eine glatte Oberfläche bereitgestellt werden, auf der der Lack gut haftet. Dadurch kann bei dem Poren aufweisenden expandierten Kunststoff eine glatte und sogar glänzende Lackoberfläche bereitgestellt werden. Alternativ kann eine glatte Oberfläche auch erst durch den Lack bereitgestellt werden. Auf den Lack kann dann mindestens eine Schicht eines weiteren Lacks oder einer weiteren Beschichtung aufgetragen werden. Eine glatte Oberfläche ist insbesondere im Bereich des Fahrzeugbaus oder Flugzeug- und Modellflugzeugbaus, insbesondere bei Flugzeugtragflächen, wo es aus Gründen der Aerodynamik und der Optik auf glatte Oberflächen bei geringem Gewicht ankommt, von großer Bedeutung.

Bei PP/EPDM handelt es sich um eine Mischung verschiedener bereits polymerisierter Polymere. In dem Kunststoff sind verschiedene Molekülsorten enthalten. Es kann sich dabei um thermoplastische Elastomere auf Olefinbasis handeln, die vorwiegend PP/EPDM enthalten, wie z. B. "Santoprene" der Firma ExxonMobil Chemical Company. Es kann sich auch um vernetzte thermoplastische Elastomere auf Olefinbasis handeln, die vorwiegend PP/EPDM enthalten, z. B. "Forprene" der Firma SO. F. TER, Italien. Bei einem Ausführungsbeispiel ist der Kunststoff ein expandiertes Polypropylen (EPP) oder expandiertes Polyethylen (EPE).

Das halogenierte Polyolefin kann einen Halogengehalt von 0,1 bis 80 Gewichtsprozent (Gew.-%), insbesondere 0,5 bis 45 Gew.-%, insbesondere 5 bis 30 Gew.-%, insbesondere 10 bis 20 Gew.-%, insbesondere 15 bis 17 Gew.-%, aufweisen. Bei dem, Halogen kann es sich um Fluor, Chlor, Brom oder Iod handeln. Das halogenierte Polyolefin kann ein fluoriertes Polyolefin, ein chloriertes Polyolefin, ein bromiertes Polyolefin oder ein iodiertes Polyolefin sein. Chloriertes Polyolefin hat sich als besonders geeignet erwiesen.

Bei dem Polyolefin kann es sich um ein Polyolefin mit einem Molekulargewicht von 5 000 bis 200 000 g/Mol, insbesondere 10 000 bis 170 000 g/Mol, insbesondere 20 000 bis 100 000 g/Mol, insbesondere 30 000 bis 60 000 g/Mol, handeln.

Bei einem Ausführungsbeispiel handelt es sich bei dem Lack um ein Acrylat, insbesondere ein Urethanacrylat, oder eine Mischung von Acrylaten, insbesondere Urethanacrylaten.

Bei einem, weiteren Ausführungsbeispiel weist die Grundierung und/oder der Lack mindestens ein UV-Absorptionsmittel, insbesondere Benzotriazol, auf. Dadurch kann der Kunststoff wirksam vor UV-Strahlung, beispielsweise im Sonnenlicht, geschützt werden. Sonnenlicht ausgesetzter Kunststoff weist dadurch eine erheblich längere Haltbarkeit auf und versprödet deutlich langsamer als ungeschützter Kunststoff.

Die Grundierung kann eine Schichtdicke von 0,1 bis 50 µm und der Lack eine Schichtdicke von 0,1 bis 2000 µm aufweisen. Durch mehrfaches Auftragen des Lacks sind auch dickere Schichten herstellbar.

Weiterhin betrifft die Erfindung ein Verfahren zur Beschichtung eines Kunststoffs aus einer Gruppe umfassend Polyethylen (PE), Polypropylen (PP), Polypropylen/Ethylen-Propylen-DienKautschuk (PP/EPDM) oder Mischungen daraus, wobei der Kunststoff ein expandierter Kunststoff ist, wobei auf den Kunststoff zunächst eine ein halogeniertes Polyolefin enthaltende Grundierung und darauf nach deren Trocknung ein durch eine Polymerisation härtender elastischer Lack so aufgetragen wird, dass dieser das Eindringen von Feuchtigkeit in den Kunststoff unterbindet, wobei bei der Polymerisation eine Radikalreaktion stattfindet. Das Eindringen von Feuchtigkeit in den Kunststoff wird unterbunden, wenn der Lack in einer solchen Menge und Konsistenz aufgetragen wird, dass dadurch die Poren des expandierten Kunststoffs verschlossen werden. Die bei der Polymerisation des aufgetragenen Lacks stattfindende Radikalreaktion ermöglicht es, dass sich der Lack so schnell verfestigen kann, dass die vom noch nicht polymerisierten Lack überspannten Poren auch vom gehärteten Lack überspannt werden. Außerdem wird durch die schnelle Verfestigung eine verhältnismäßig glatte Oberfläche ermöglicht. Der noch flüssige Lack hat vor dem Verfestigen nicht genug Zeit, um sich wesentlich von den Poren zurückzuziehen oder wesentlich in die Poren einzufließen. Sowohl die Grundierung als auch der Lack können durch Walzen, Spritzen, insbesondere Heißspritzen, HVLP-Spritzen, Airless-Spritzen oder Airmix-Spritzen, Fluten, Gießen, Tauchen, Streichen, Rollen oder Durchschießen des Kunststoffs durch eine Wand aus flüssigem Lack (Durchschussverfahren) aufgetragen werden. Die Grundierung kann dabei mit einer Schichtdicke von 0,1 bis 50 µm und der Lack mit einer Schichtdicke von 0,1 bis 2000 µm aufgetragen werden. Auf dem Lack kann mindestens eine Schicht eines weiteren Lacks oder einer weiteren Beschichtung aufgetragen werden.

Nach Auftragen der Grundierung kann deren Trocknung an der Luft oder beschleunigt durch Zufuhr von wärme, beispielsweise in einem Ofen oder durch Infrarotstrahlung, erfolgen.

Die Grundierung kann abgesehen von einem Lösungsmittel oder Dispersionsmittel ausschließlich aus dem halogenierten Polyolefin bestehen. Die Grundierung kann das halogenierte Polyolefin auch in einem durch Polyaddition, Polykondensation und/oder radikalische Polymerisation härtenden und einen zumindest teilweise geschlossenen Film bildenden Kunststoff enthalten.

Bei dem Kunststoff kann es sich um ein expandiertes Polypropylen (EPP) oder expandiertes Polyethylen (EPE) handeln. Bei einer Ausgestaltung weist das halogenierte Polyolefin einen Halogengehalt von 0,1 bis 80 Gew.-%, insbesondere 0,5 bis 45 Gew.-%, insbesondere 5 bis 30 Gew.-%, insbesondere 10 bis 20 Gew.-%, insbesondere 15 bis 17 Gew.-%, auf. Bei dem Polyolefin kahn es sich um ein Polyolefin mit einem Molekulargewicht von 5 000 bis 200 000 g/Mol, insbesondere 10 000 bis 170 000 g/Mol, insbesondere 20 000 bis 100 000 g/Mol, insbesondere 30 000 bis 60 000 g/Mol, handeln.

Bei dem Lack kann es sich um ein Acrylat, insbesondere ein Urethanacrylat, oder eine Mischung von Acrylaten, insbesondere Urethanacrylaten, handeln. In dem Lack kann ein Photoinitiator zur Initiierung der Radikalreaktion durch Aktivierung des Photoinitiators, insbesondere durch UV-Licht, enthalten sein. Bei der Polymerisation des Lacks kann neben der Radialreaktion auch eine Polyadditionsreaktion oder eine Polykondensationsreaktion erfolgen. Dazu kann in dem Lack beispielsweise ein Epoxid, insbesondere ein aliphatisches oder ein aromatisches Epoxid, und/oder ein Di- oder Polyisozyanat und ein Di- oder Polyalkohol enthalten sein. Zum Auftragen kann der Lack in einen organischen Lösungsmittel, beispielsweise Xylol gelöst sein. Er kann aber auch als Wasserlack ausgebildet sein.

Die Oberfläche des Kunststoffs kann zur Verbesserung der Haftung vor der Grundierung aktiviert werden. Dabei werden auf der Oberfläche des Kunststoffs funktionelle Gruppen erzeugt. Das Aktivieren kann beispielsweise durch Beflammen, Corona-Behandlung, Plasma-Behandlung oder Silikatisierung erfolgen. Bei der Silikatisierung wird durch Einspeisen einer Siliziumorganischen Verbindung, wie beispielsweise Silan, in eine Flamme durch eine so genannten "Flammenpyrolyse" eine dünne, jedoch sehr dichte, feuchtestabile und festhaftende Siliziumdioxidschicht auf der Kunststoffoberfläche erzeugt. Ein weseitlicher Vorteil des erfindungsgemäßen Verfahrens besteht jedoch darin, dass zur Ausbildung einer guten Haftung eine Aktivierung der Oberfläche des Kunststoffs nicht unbedingt erforderlich ist.

Bei einer Ausgestaltung des Verfahrens weist die Grundierung und/oder der Lack ein UV-Absorptionsmittel auf.

Nachfolgend wird die Erfindung anhand eines Ausführungsbeispiels näher erläutert.

Ein aus expandiertem Polypropylen (EPP) bestehendes Kunststoffteil wird zunächst mit einem in Xylol gelösten chlorierten Polyolefin durch Aufspritzen grundiert und getrocknet. Das Trocknen erfolgt an der Luft für 2 bis 6 Minuten bei Raumtemperatur. Die Schichtdicke der Grundierung kann zwischen 0,5 und 4 µm liegen.

Auf die getrocknete Grundierung wird ein durch Bestrahlung mit UV-Licht härtbarer lösungsmittelfreier Lack folgender zusammensetzung aufgebracht:

40 Gewichtsprozent (Gew.-%) 2-Propionsäure (1R, 2R, 4R)-1,7,7-trimethylbicyclo[2.2.2]hept-2-ylester, 28 Cew.-% Laromer UA 9033 V der Firma BASF, 67056 Ludwigshafen, Deutschland, 19,6 Gew.-% Urethanacrylat, 8,26 Gew.-% 2-Propionsäure-2-methyl-2-hydroxypropylester, 2 Gew.-% Benzophenon, 2 Gew.-% Methanon(1-hydroxycyclohexyl)phenylketon, 0,14 Gew.-% Phosphorige Säure Triphenylester.

Das Ausbringen des Lacks erfolgt in einem Heißspritzverfahrens bei einer Temperatur von etwa 40°C bis 60°C mit einer Nassfilmschichtdicke von etwa 200 µm. Anschließend erfolgt ein Aushärten durch Bestrahlung mit UV-Licht für etwa 1 bis 3 Sekunden mittels einer handelsüblichen UV-Trocknungseinheit mit Quecksilberdampflampe. Nach der UV-Licht-initiierten Härtung ist das beschichtete Kunststoffseil sofort gebrauchsfertig. Es kann jedoch auch mindestens eine weitere Schicht des genannten Lacks aufgetragen und wie beschrieben ausgehärtet werden. Durch den UV-härtenden Lack werden Poren in dem EPP überspannt und verschlossen. Weiterhin können durch den Lack, beispielsweise von Poren herrührende, Unebenheiten in dem EPP-Kunststoffteil ausgeglichen werden. Der Lackauftrag kann so oft wiederholt werden, bis eine glatte Oberfläche entstanden ist. Das Auftragen des Lacks kann manuell oder maschinell erfolgen. Beim Aushärten des Lacks bzw. nachfolgender dekorativer Beschichtungen sollte die Temperatur des Kunststoffteils 100°C nicht überschreiten.

## Patentansprüche

1. Kunststoff aus einer Gruppe umfassend Polyethylen (PE), Polypropylen (PP), Polypropylen/Ethylen-Propylen-Dien-Kautschuk (PP/EPDM) oder Mischungen daraus, wobei der Kunststoff mit mindestens einer ein halogeniertes Polyolefin enthaltenden Grundierung und die Grundierung mit mindestens einem durch Polymerisation unter Beteiligung einer Radikalreaktion gehärteten elastischen Lack beschichtet ist, wobei der Kunststoff ein expandierter Kunststoff ist, bei dem der Lack das Eindringen von Feuchtigkeit unterbindet, wobei es sich bei dem Lack um ein Acrylat oder eine Mischung von Acrylaten handelt.

2. Kunststoff nach Anspruch 1, wobei der Kunststoff ein expandiertes Polypropylen (EPP) oder expandiertes Polyethylen (EPE) ist.

3. Kunststoff nach einem der vorhergehenden Ansprüche, wobei das halogenierte Polyolefin einen Halogengehalt von 0,1 bis 80 Gewichtsprozent (Gew.-%), insbesondere 0,5 bis 45 Gew.-%, insbesondere 5 bis 30 Gew.-%, insbesondere 10 bis 20 Gew.-%, insbesondere 15 bis 17 Gew.-%, aufweist.

4. Kunststoff nach einem der vorhergehenden Ansprüche, wobei es sich bei dem Polyolefin um ein Polyolefin mit einem Molekulargewicht von 5 000 bis 200 000 g/Mol, insbesondere 10 000 bis 170 000 g/Mol, insbesondere 20 000 bis 100 000 g/Mol, insbesondere 30 000 bis 60 000 g/Mol, handelt.

5. Kunststoff nach einem der vorhergehenden Ansprüche, wobei es sich bei dem Lack um ein Urethanacrylat oder eine Mischung von Urethanacrylaten handelt.

6. Kunststoff nach einem der vorhergehenden Ansprüche, wobei die Grundierung und/oder der Lack mindestens ein UV-Absorptionsmittel, insbesondere Benzotriazol, aufweist.

7. Verfahren zur Beschichtung eines Kunststoffs aus einer Gruppe umfassend Polyethylen (PE), Polypropylen (PP), Polypropylen/Ethylen-Propylen-Dien-Kautschuk (PP/EPDM) oder Mischungen daraus, wobei der Kunststoff ein expandierter Kunststoff ist, wobei auf den Kunststoff zunächst eine ein halogeniertes Polyolefin enthaltende Grundierung und darauf nach deren Trocknung ein durch eine Polymerisation härtender elastischer Lack so aufgetragen wird, dass dieser das Eindringen von Feuchtigkeit in den Kunststoff unterbindet, wobei bei der Polymerisation eine Radikalreaktion stattfindet, wobei der Lack Poren des expandierten Kunststoffs überspannt und so schnell aushärtet, dass sich eine Lackschicht über den Poren während des Aushärtens durch Fließprozesse nicht wesentlich verdünnt.

8. Verfahren nach Anspruch 7, wobei der Kunststoff ein expandiertes Polypropylen (EPP) oder expandiertes Polyethylen (EPE) ist.

9. Verfahren nach Anspruch 7 oder 8, wobei das halogenierte Polyolefin einen Halogengehalt von 0,1 bis 80 Gew.-%, insbesondere 0,5 bis 45 Gew.-%, insbesondere 5 bis 30 Gew.-%, insbesondere 10 bis 20 Gew.-%, insbesondere 15 bis 17 Gew.-%, aufweist.

10. verfahren nach einem der Ansprüche 7 bis 9, wobei es sich bei dem Polyolefin um ein Polyolefin mit einem Molekulargewicht von 5 000 bis 200 000 g/Mol, insbesondere 10 000 bis 170 000 g/Mol, insbesondere 20 000 bis 100 000 g/Mol, insbesondere 30 000 bis 60 000 g/Mol, handelt.

11. verfahren nach einem der Ansprüche 7 bis 10, wobei es sich bei dem Lack um ein Acrylat, insbesondere ein Urethanacrylat, oder eine Mischung von Acrylaten, insbesondere Urethanacrylaten, handelt.

12. verfahren nach einem der Ansprüche 7 bis 11, wobei die Oberfläche des Kunststoffs vor dem Auftragen der Grundierung aktiviert wird.

13. Verfahren nach Anspruch 12, wobei das Aktivieren durch Beflammen, Corona-Behandlung, Plasma-Behandlung oder Silikatisierung erfolgt.

14. Verfahren nach einem der Ansprüche 7 bis 13, wobei die Grundierung und/oder der Lack ein UV-Absorptionsmittel aufweisen.

## Claims

1. Plastic from a group comprising polyethylene (PE), polypropylene (PP), polypropylene/ethylene-propylene-diene rubber (PP/EPDM) or mixtures thereof, where the plastic has been coated with at least one primer containing a halogenated polyolefin, and the primer has been coated with at least one resilient coating material cured via polymerization with involvement of a radical reaction, where the plastic is an expanded plastic, where the coating material suppresses the penetration of moisture, where the coating material is an acrylate or a mixture of acrylates.

2. Plastic according to Claim 1, where the plastic is an expanded polypropylene (EPP) or expanded polyethylene (EPE).

3. Plastic according to either of the preceding claims, where the halogen content of the halogenated polyolefin is from 0.1 to 80 percent by weight (% by weight), in particular from 0.5 to 45% by weight, in particular from 5 to 30% by weight, in particular from 10 to 20% by weight, in particular from 15 to 17% by weight.

4. Plastic according to any of the preceding claims, where the polyolefin is a polyolefin with a molecular weight of from 5000 to 200 000 g/mol, in particular from 10 000 to 170 000 g/mol, in particular from 20 000 to 100 000 g/mol, in particular from 30 000 to 60 000 g/mol.

5. Plastic according to any of the preceding claims, where the coating material is a urethane acrylate or a mixture of urethane acrylates.

6. Plastic according to any of the preceding claims, where the primer and/or the coating material comprises at least one UV-absorption agent, in particular benzotriazole.

7. Process for the coating of a plastic from a group comprising polyethylene (PE), polypropylene (PP), polypropylene/ethylene-propylene-diene rubber (PP/EPDM) or mixtures thereof, where the plastic is an expanded plastic, where a primer containing a halogenated polyolefin is first applied to the plastic and after drying thereof a resilient coating material cured via a polymerization is applied thereto in such a way that this suppresses the penetration of moisture into the plastic, where a radical reaction takes place during the polymerization, where the coating material spans pores of the expanded plastic and its hardening is sufficiently rapid that flow processes do not cause any substantial thinning of a layer of coating material over the pores during hardening.

8. Process according to Claim 7, where the plastic is an expanded polypropylene (EPP) or expanded polyethylene (EPE).

9. Process according to Claim 7 or 8, where the halogen content of the halogenated polyolefin is from 0.1 to 80% by weight, in particular from 0.5 to 45% by weight, in particular from 5 to 30% by weight, in particular from 10 to 20% by weight, in particular from 15 to 17% by weight.

10. Process according to any of Claims 7 to 9, where the polyolefin is a polyolefin with a molecular weight of from 5000 to 200 000 g/mol, in particular from 10 000 to 170 000 g/mol, in particular from 20 000 to 100 000 g/mol, in particular from 30 000 to 60 000 g/mol.

11. Process according to any of Claims 7 to 10, where the coating material is an acrylate, in particular a urethane acrylate, or a mixture of acrylates, in particular urethane acrylates.

12. Process according to any of Claims 7 to 11, where the surface of the plastic is activated before the primer is applied.

13. Process according to Claim 12, where the activation takes place through flame treatment, corona treatment, plasma treatment or silicatization.

14. Process according to any of Claims 7 to 13, where the primer and/or the coating material comprises a UV-absorption agent.

## Revendications

1. Plastique provenant d'un groupe comprenant le polyéthylène (PE), le polypropylène (PP), le polypropylène/éthylène-propylène-diène-caoutchouc (PP/EPDM) ou des mélanges de ceux-ci, dans lequel le plastique est enduit d'au moins une première couche contenant une polyoléfine halogénée et la première couche est enduite d'au moins une laque élastique durcie par polymérisation avec la participation d'une réaction radicalaire, dans lequel le plastique est un plastique expansé pour lequel la laque empêche la pénétration d'humidité, dans lequel il s'agit pour la laque d'un acrylate ou d'un mélange d'acrylates.

2. Plastique selon la revendication 1, dans lequel le plastique est un polypropylène expansé (EPP) ou polyéthylène expansé (EPE).

3. Plastique selon l'une quelconque des revendications précédentes, dans lequel la polyoléfine halogénée présente une teneur en halogène de 0,1 à 80 pour cent en poids (% en poids), notamment 0,5 à 45 % en poids, notamment 5 à 30 % en poids, notamment 10 à 20 % en poids, notamment 15 à 17 % en poids.

4. Plastique selon l'une quelconque des revendications précédentes, dans lequel il s'agit pour la polyoléfine d'une polyoléfine avec un poids moléculaire de 5000 à 200 000 g/mol, notamment 10 000 à 170 000 g/mol, notamment 20 000 à 100 000 g/mol, notamment 30 000 à 60 000 g/mol.

5. Plastique selon l'une quelconque des revendications précédentes, dans lequel il s'agit pour la laque d'un acrylate d'uréthane ou d'un mélange d'acrylates d'uréthane.

6. Plastique selon l'une quelconque des revendications précédentes, dans lequel la première couche et/ou la laque présente au moins un agent d'absorption des UV, notamment du benzotriazole.

7. Procédé d'enduction d'un plastique provenant d'un groupe comprenant le polyéthylène (PE), le polypropylène (PP), le polypropylène/éthylène-propylène-diène-caoutchouc (PP/EPDM) ou des mélanges de ceux-ci, dans lequel le plastique est un plastique expansé, dans lequel une première couche contenant une polyoléfine halogénée est d'abord appliquée sur le plastique et, après son séchage, une laque élastique durcie par une polymérisation est appliquée sur celle-ci de sorte que la laque empêche la pénétration d'humidité dans le plastique, dans lequel une réaction radicalaire a lieu lors de la polymérisation, dans lequel la-laque recouvre des pores du plastique expansé et durcit si rapidement qu'une couche de laque sur les pores ne s'amincit pas nettement pendant le durcissement grâce à des processus d'écoulement.

8. Procédé selon la revendication 7, dans lequel le plastique est un polypropylène expansé (EPP) ou polyéthylène expansé (EPE).

9. Procédé selon la revendication 7 ou 8, dans lequel la polyoléfine halogénée présente une teneur en halogène de 0,1 à 80 % en poids, notamment 0,5 à 45 % en poids, notamment 5 à 30 % en poids, notamment 10 à 20 % en poids, notamment 15 à 17 % en poids.

10. Procédé selon l'une quelconque des revendications 7 à 9, dans lequel il s'agit pour la polyoléfine d'une polyoléfine avec un poids moléculaire de 5000 à 200 000 g/mol, notamment 10 000 à 170 000 g/mol, notamment 20 000 à 100 000 g/mol, notamment 30 000 à 60 000 g/mol.

11. Procédé selon l'une quelconque des revendications 7 à 10, dans lequel il s'agit pour la laque d'un acrylate, notamment d'un acrylate d'uréthane, ou d'un mélange d'acrylates, notamment d'acrylates d'uréthane.

12. Procédé selon l'une quelconque des revendications 7 à 11, dans lequel la surface du plastique est activée avant l'application de la première couche.

13. Procédé selon la revendication 12, dans lequel l'activation s'effectue par traitement à la flamme, traitement corona, traitement plasma ou silicatisation.

14. Procédé selon l'une quelconque des revendications 7 à 13, dans lequel la première couche et/ou la laque présentent un agent d'absorption des UV.
